# FASCICULE DE BREVET EUROPEEN

(11) **EP 2 632 309 B1**
(45) Date de publication et mention de la délivrance du brevet: **14.05.2014**
(21) Numéro de dépôt: 11787734.0
(22) Date de dépôt: 24.10.2011
(51) Int. Cl.: A47J 31/32

(54) **APPAREIL DE CONFECTION D'INFUSIONS DU TYPE A RETOURNEMENT**
UMSCHALTBARES GERÄT ZUR HERSTELLUNG VON AUFGÜSSEN
APPLIANCE FOR MAKING INFUSIONS, OF THE REVERSIBLE TYPE

(30) Priorité: 26.10.2010 FR 1004229
(43) Date de publication de la demande: 04.09.2013
(73) Titulaire: Handpresso, 77300 Fontainebleau (FR)
(72) Inventeur: NIELSEN, Henrik, F-77300 Fontainebleau (FR); PETITDEMANGE, David, Vaux Le Penil (FR)
(74) Mandataire: Wagret, Frédéric
(86) Numéro de dépôt international: PCT/FR2011/052478
(87) Numéro de publication internationale: WO 2012/056158

(56) Documents cités:
- FR-A1- 2 896 676
- FR-A1- 2 912 664
- US-A1- 2010 162 899

## Description

L'invention, se rapporte à un appareil de confection d'infusions, notamment d'expresso, du type à retournement comportant un réservoir présentant un fond et une ouverture communiquant avec une tête d'infusion qui comprend une pièce de réception d'une charge à infuser présente un orifice d'entrée communiquant avec l'ouverture du réservoir et une pièce de fermeture reliée à un orifice d'écoulement de l'infusion et délimitant entre elles une chambre d'infusion, ledit réservoir étant connecté, via une paille débouchant dans la région de fond du réservoir, à un distributeur doté d'au-moins une voie reliée à un moyen de mise en pression d'air pour chasser l'eau chaude contenue dans le réservoir, et le réservoir pouvant occuper deux positions soit une position d'attente correspondant au remplissage par l'ouverture tournée vers le haut ou de chauffage avec l'ouverture susceptible d'être coiffée par la tête en position haute, soit une position d'infusion pour laquelle le réservoir et la tête sont retournés vers le bas permettant l'écoulement de l'infusion dans un récipient.

Par appareil de confection d'infusions du type à retournement, on entend, par exemple, un appareil tel que décrit dans la Demande de brevet français FR2896676 dans laquelle on amène, dans un réservoir lié à une tête d'infusion, de l'eau chaude préalablement chauffée dans un récipient indépendant tel qu'une bouilloire ou bouteille isolante, permettant ainsi après l'opération de remplissage en eau et insertion de la charge à infuser d'effectuer, par retournement de l'appareil et commande d'un distributeur, la confection d'une infusion de type expresso en tous lieux. Bien que ce type d'appareil ait rencontré un vif succès commercial, il s'avère que certains utilisateurs souhaiteraient notamment un chauffage intégré. La Demanderesse s'est donc appliquée à répondre à ce souhait et a rencontré de nombreux problèmes de réalisation économique et ergonomique liés notamment à la transformation du réservoir en un bouilleur.

On connaît également un appareil électrique tel que celui décrit, par exemple, dans le brevet US 3518933.

Dans cet appareil, l'eau chaude est produite par un bouilleur électrique alimenté en eau par une canalisation reliée à un réservoir indépendant connecté à un moyen de mise en pression pour chasser l'eau chaude. Le bouilleur comprend une soupape commandée destinée à laisser passer l'eau chaude contenue dans le bouilleur directement dans la tête d'infusion.

Cet appareil n'est pas du type à retournement et poserait de nombreux problèmes pour l'adapter à cette technologie.
De plus, il nécessite de nombreuses pièces entraînant un coût de fabrication élevé et contribuant à une dépense énergétique.
On connaît (voir le document US-A-2010/162899) un appareil de confection d'infusions du type à retournement comportant un réservoir présentant un fond et une ouverture communiquant avec une tête d'infusion comprenant une pièce de réception d'une charge à infuser présentant un orifice d'entrée communiquant avec l'ouverture du réservoir, et une pièce de fermeture reliée à un orifice d'écoulement de l'infusion et délimitant entre elles une chambre d'infusion; ledit réservoir étant connecté, via une paille débouchant dans la région de fond du réservoir, à un distributeur à au-moins une voie relié à un moyen de mise en pression d'air pour chasser l'eau chaude contenue dans le réservoir, et pouvant occuper deux positions, soit une position d'attente correspondant au remplissage par l'ouverture tournée vers le haut ou de chauffage avec l'ouverture susceptible d'être coiffée par la tête d'infusion, soit une position d'infusion pour laquelle le réservoir et la tête sont retournés vers le bas permettant l'écoulement de l'infusion dans un récipient. Le réservoir comporte une soupape 96 agencée au-dessus d'un seuil de remplissage et dont l'élément mobile 230 peut occuper soit une position de repos pour laquelle elle peut mettre le réservoir à l'air libre via un conduit, soit une position d'obturation en laquelle elle repose sur un siège d'étanchéité 232 pour laquelle elle ferme la liaison au conduit et en laquelle elle est amenée lorsque le réservoir est en position d'infusion.

L'invention a donc pour but de pallier les inconvénients de l'art antérieur en réalisant un appareil bon marché qui allie à la fois une grande commodité d'utilisation chez soi ou en dehors et une grande sécurité de fonctionnement du bouilleur.

Selon l'invention, le réservoir est associé à un moyen de chauffage R constituant ainsi un bouilleur et comporte une soupape agencée au-dessus d'un seuil de remplissage et dont l'élément mobile peut occuper soit une position de repos pour laquelle la soupape peut mettre le réservoir à l'air libre via un conduit, soit une position d'obturation en laquelle l'élément mobile repose sur un siège d'étanchéité, et pour laquelle la soupape ferme la liaison au conduit et est amenée lorsque le réservoir est en position d'infusion.

Grâce à cette soupape et dans le cas où l'orifice d'entrée ou l'ouverture du réservoir est fermé par tout moyen pour isoler la charge à infuser de la vapeur, on réalise deux fonctions : l'évacuation la vapeur naissante hors du réservoir limitant la pression à la pression atmosphérique, et l'étanchéité liquide de ce réservoir lorsque qu'il est amené en position d'infusion et que le distributeur autorise la mise en pression d'air de ce réservoir pour obliger l'eau chaude sous pression à passer uniquement par l'orifice d'entrée et traverser ainsi la charge.

Selon une particularité de construction de l'invention particulièrement économique et ergonomique, le conduit de la soupape est associé à une chambre qui comporte deux entrées, une entrée communiquant avec le siège d'étanchéité et l'autre entrée reliée à la paille, ainsi qu'une sortie reliée au conduit relié lui-même au distributeur, le distributeur comportant une vanne à au-moins deux voies, manoeuvrée par une manette et comprenant une arrivée d'air comprimé(A) et deux voies de sélection, dont une voie (B) est reliée par une canalisation unique à la sortie de la chambre et reliée par ladite chambre à la paille d'amenée de l'air comprimé pour effectuer l'opération d'infusion, et dont l'autre voie(C) permet à la fois la mise à l'air libre, et la purge du bouilleur via la paille, la chambre et la canalisation.

Grâce à cette soupape avec chambre commune combinée avec le distributeur, on comprendra que l'on peut réaliser à la fois la mise en pression d'air et la mise à l'air libre du bouilleur et la purge partielle ou non du bouilleur pour confectionner un café dit « restretto » puisque l'utilisateur peut effectuer la purge à tout moment de l'opération d'infusion, voire même purger d'air en urgence le réservoir en cas de problème de fonctionnement.

Selon une autre caractéristique de l'invention, l'appareil comporte un dispositif de sécurité subordonné, d'une part à une manette d'un distributeur, et d'autre part à une clavette montée mobile entre deux états de verrouillage-déverrouillage du système de fixation de la pièce de fermeture sur la pièce de réception de la tête d'infusion et subordonnée à une position de purge prise par la manette; ladite clavette et le distributeur étant liés par un mécanisme à fonctionnement concomitant.

Les revendications secondaires reprennent les autres caractéristiques du dispositif.

Ainsi, grâce à cette construction particulière de la sécurité, on garantit à l'utilisateur un fonctionnement fiable et sécuritaire en l'obligeant à procéder à une purge du réservoir avant toute manoeuvre de la baïonnette.

Les caractéristiques et avantages de l'invention ressortiront d'ailleurs de la description qui va suivre, prise à titre d'exemple non limitatif, en référence aux dessins annexés dans lesquels :
La figure 1 est une vue en coupe verticale d'une partie d'un appareil illustrant un réservoir équipé d'un distributeur de pression et d'une soupape selon l'invention en sa phase de remplissage ou de chauffage ;
La figure 2 est une vue similaire à la figure 1, mais avec le réservoir équipé d'une tête d'infusion et en position retournée illustrant la phase d'infusion;
La figure 3 représente en coupe partielle brisée, à plus grande échelle, la soupape de la figure 2 et une paille ramenées dans un même plan de coupe pour illustrer une chambre selon l'invention ;
La figure 4 est une représentation partielle en coupe verticale d'un dispositif de sécurité selon l'invention en position verrouillée et associé à la tête d'infusion ;
La figure 5 est une vue similaire à celle de la figure 4, mais avec le dispositif de sécurité en position de déverrouillage.

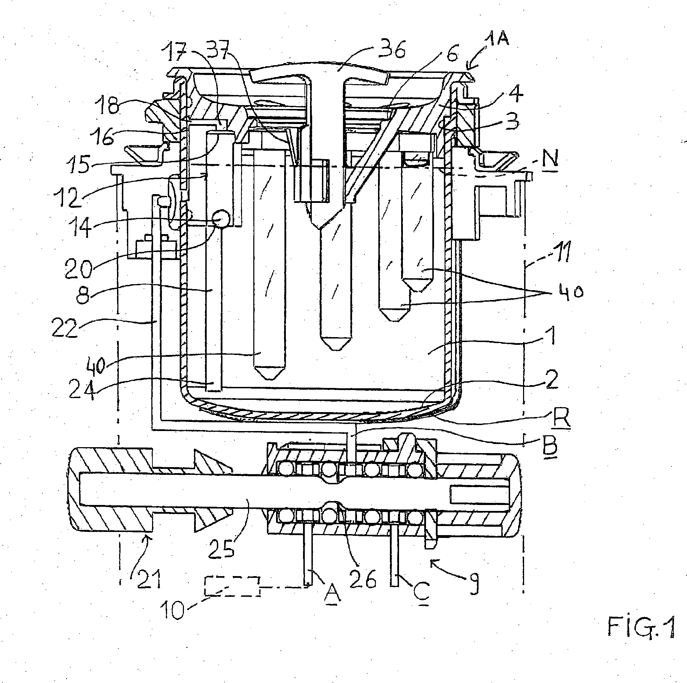

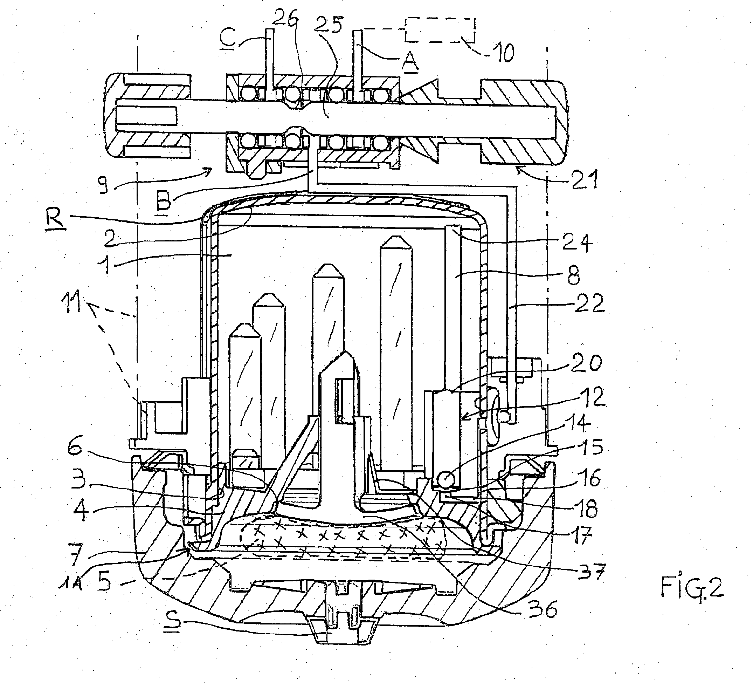

En se rapportant à la figure 2, on a représenté partiellement un appareil de confection d'infusions du type expresso à retournement comportant un réservoir d'eau 1 présentant un fond 2 et une ouverture 3. Cette ouverture 3 communique avec une tête d'infusion 1A comprenant une pièce de réception 4 d'une charge 5 à infuser, la pièce de réception présentant un orifice d'entrée 6 communiquant avec l'ouverture 3 du réservoir, et une pièce de fermeture 7 reliée à un orifice S d'écoulement de l'infusion et délimitant avec la pièce de réception une chambre d'infusion. Ledit réservoir 1 est connecté, via une paille 8 débouchant dans la région du fond 2 du réservoir, à un distributeur 9, plus particulièrement à au-moins une voie reliée à un moyen 10 de mise en pression d'air pour chasser l'eau chaude contenue dans le réservoir. Le réservoir 1 peut occuper deux positions soit une position d'attente (figure 1), soit une position d'infusion (figuré 2).

La position d'attente (figure 1) correspond au remplissage par l'orifice d'entrée 6 libre qui est tourné vers le haut, ou bien correspond au chauffage du réservoir avec l'ouverture 3 susceptible d'être coiffée par la tête d'infusion en position haute.

La position d'infusion (figure 2) correspond à à la position pour laquelle le réservoir 1 et la tête d'infusion, 1A sont retournées vers le bas permettant l'écoulement de l'infusion dans un récipient tel que, par exemple, une tasse ou un bol ou un pot. Ce retournement s'effectue selon une rotation de 180 degrés.

Par produits à infuser, on entend notamment de la mouture de café, mais on peut prévoir également du thé, de la poudre de chocolat etc... Pour la suite de la description, le produit à infuser sera de la mouture de café.

Par charge à infuser, on se réfère à des cartouches en papier ou textile ou capsules métalliques, voire même à un godet filtrant rempli de produit à infuser.

Comme il sera expliqué plus loin dans la description, les essais effectués pour optimiser l'extraction des arômes ont démontré que la charge doit être isolée des vapeurs naissantes générées lors du chauffage de l'eau du réservoir.

Ainsi, l'appareil peut fonctionner lors du chauffage avec l'orifice d'entrée 6 obturable par tous moyens : capsules métalliques étanches, clapet etc..., ou débouchant à l'air libre et sans charge. Comme expliqué ci-après et selon une caractéristique de l'invention, cet orifice peut être fermé par un clapet mobile 36 à fonctionnement automatique.

L'appareil représenté sur ces figures comporte un boîtier schématisé en traits interrompus sous la référence 11 et contenant le moyen 10 de mise en pression de l'eau chaude pour la chasser hors du réservoir par l'orifice d'entrée 6 afin d'accomplir une infusion.

Selon une caractéristique importante de l'invention, le moyen 10 de mise en pression est du type à air comprimé généré par un compresseur non représenté et sous une pression située de préférence entre 10 et 14 bars.

Selon l'invention, le réservoir 1 est associé à un moyen de chauffage R constituant ainsi un bouilleur et comporte une soupape 12 agencée au-dessus d'un seuil de remplissage et dont l'élément mobile 14 peut occuper soit une position de repos pour laquelle la soupape peut mettre le réservoir à l'air libre via un conduit 16, soit une position d'obturation en laquelle l'élément mobile repose sur un siège d'étanchéité 15 et pour laquelle la soupape ferme la liaison au conduit et et est amenée lorsque le réservoir est en position d'infusion.

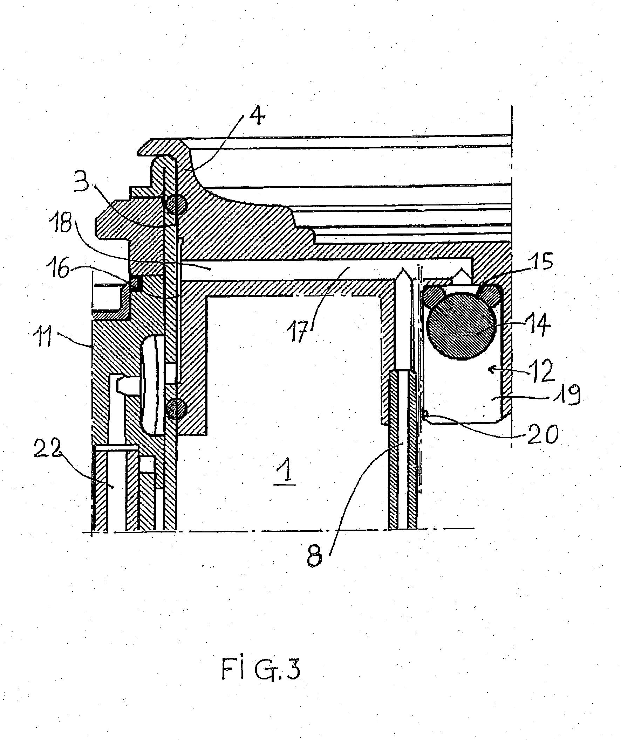

Dans un mode préféré de réalisation mieux représenté sur la figure 3, le conduit 16 de la soupape 12 est associé à une chambre 17 qui comporte deux entrées, une entrée communiquant avec le siège 15 d'étanchéité et l'autre entrée reliée à la paille 8, ainsi qu'une sortie 18 reliée au conduit 16 lui même relié au distributeur 9.

La soupape 12 présente la forme d'un tube 19 agencé verticalement dans le réservoir 1 et dont une extrémité porte le siège 15 d'étanchéité fixé sur la chambre 17 et dont l'autre extrémité porte un siège 20 de repos, et l'élément mobile de la soupape est du type à bille 14 se déplaçant par gravité entre lesdits sièges. La bille 14 vient reposer soit sur le siège 20 de repos lorsque l'appareil est en position d'attente, soit sur le siège 15 d'étanchéité lorsque l'appareil est en position d'infusion. La bille 14, ne devant pas pouvoir flotter, est du type plongeant à densité supérieure à celle de l'eau et peut être réalisée en acier ou en verre. Le siège 15 est de préférence réalisé par un joint torique en silicone susceptible d'être nettoyé du tartre ou d'impuretés lorsque l'air sous pression arrive dans la chambre 17.

Le seuil de remplissage maximal schématisé à la figure 1 par un trait interrompu N est déterminé de fabrication et le réservoir comporte à cet effet au moins un indicateur en plastique transparent de niveau maximal à ne pas dépasser pour éviter que l'eau de remplissage ne sorte par la chambre 16. Plusieurs indicateurs 40 saillants dans le réservoir sont illustrés sur les figures 1 et 2 pour obtenir un remplissage progressif et précis.

En considérant que, par commodité d'utilisation, l'ouverture ou l'orifice d'entrée est obturé par tous moyens :robinet, vanne ou clapet du type décrit ci-après, et que la charge est déjà installée dans la chambre d'infusion, cette soupape 12 permet donc, dans une première phase, d'évacuer la vapeur naissante générée par le chauffage de l'eau. Dans une seconde phase où le réservoir est en position d'infusion, cette soupape agit comme un obturateur empêchant une fuite d'eau chaude par la sortie de mise à l'air libre. Dès que l'utilisateur envoie la pression d'air par le distributeur, cet air arrive dans la chambre 17 et sort principalement par la paille 8 pour chasser l'eau chaude uniquement à travers la charge, le siège 15 et la bille 14 n'influençant pas cette mise en pression du réservoir.

Préférentiellement, le moyen de chauffage R est du type à résistance électrique sérigraphiée sur le fond 2 et/ou la paroi latérale du réservoir. L'alimentation électrique est également, de préférence, prévue sous 12 volts permettant ainsi à l'appareil de fonctionner sur tous véhicules ou engins nautiques.

Selon un mode préféré de réalisation, le distributeur 9 comporte une vanne, présentement à deux voies, manoeuvrée par une manette 21 et comporte une arrivée d'air comprimé A et deux voies de sélection B et C. La voie B est reliée par une canalisation unique 22 à la sortie 18 de la chambre 17, pénétrant dans le réservoir 1 et reliée par la chambre 17 à la paille 8 d'amenée de l'air comprimé jusqu'à l'extrémité libre 24 agencée dans le fond du réservoir pour effectuer l'opération d'infusion. L'autre voie C permet à la fois la mise à l'air libre, et la purge du bouilleur par la paille 8 et la canalisation 22. Cette construction particulière de l'ensemble chambre, paille, canalisation unique et distributeur simplifié permet d'obtenir un avantage concurrentiel tant en coût de fabrication et montage, qu'en ergonomie.

D'autre part, dans le cas où l'utilisateur souhaite faire un café expresso dit « restretto », la mise en pression d'air du réservoir doit être arrêtée et l'utilisateur agira sur le distributeur 9 pour commander la purge ou mise à l'air libre du réservoir interrompant ainsi l'écoulement de l'eau chaude et donc l'infusion.

Ainsi, cette soupape unique remplit donc trois fonctions : mise à l'air libre et purge, sécurité contre une surpression du bouilleur, et étanchéité liquide du bouilleur en position d'infusion. Grâce à cette construction, on réduit les coûts de fabrication et de main d'oeuvre et l'on améliore la fiabilité de l'appareil.

Par souci d'économie de construction, le distributeur 9 comprend un corps tubulaire dans lequel est monté mobile axialement un boisseau 25 actionné par la manette 21 à deux touches antagonistes, et présentant une gorge annulaire 26 susceptible de se déplacer dans différentes chambres annulaires séparées par des joints toriques et reliées respectivement aux voies A, B et C.

Toujours dans un but d'ergonomie et d'esthétique, le boîtier 11 présente une forme générale tubulaire renfermant le bouilleur électrique qui présente la forme d'un pot tubulaire dont l'ouverture 3 est fermée de façon étanche par la pièce de réception 4 qui comporte notamment la soupape 12.

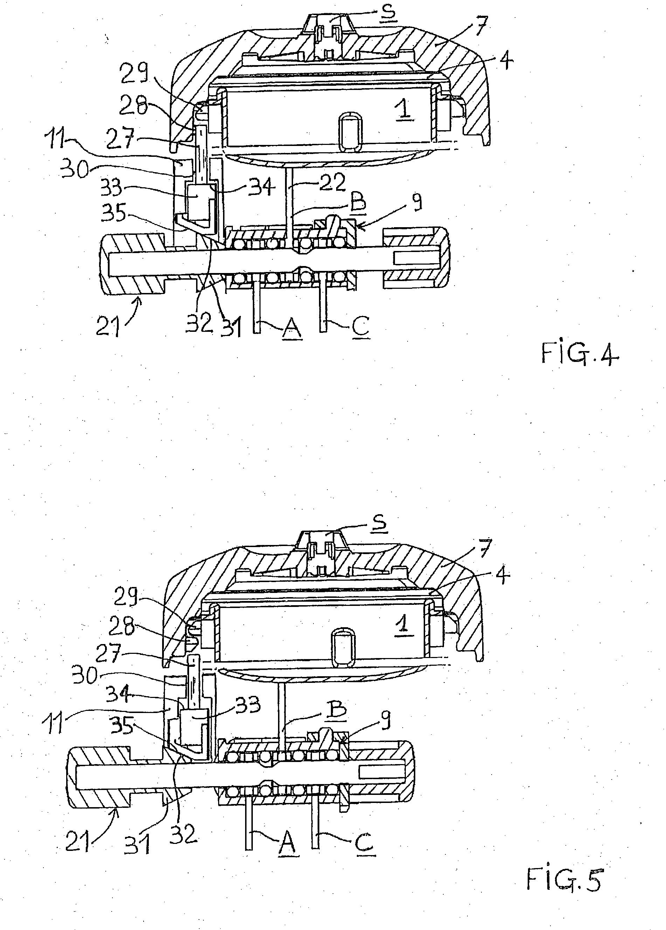

Selon une autre caractéristique particulièrement importante de l'invention et comme représenté aux figures 4 et 5, l'appareil comporte un dispositif de sécurité subordonné, d'une part à la manette 21 du distributeur 9, et d'autre part, à une clavette 27 montée mobile entre deux états de verrouillage-déverrouillage du système de fixation de la pièce de fermeture 7 sur la pièce de réception 4 de la tête d'infusion et subordonnée à une position de purge prise par la manette, ladite clavette et le distributeur étant liés par un mécanisme à fonctionnement concomitant.

Comme représenté, le système de fixation étant du type à baïonnette avec des ergots 28 et des rampes 29 respectivement agencés sur la pièce de fermeture 7 et sur la pièce de réception 4. La clavette 27 est montée mobile par gravité selon une direction verticale ou longitudinal dans un logement 30 pratiqué dans le boîtier et peut occuper en fonction de la position prise par la manette du distributeur soit une position neutre (figure 5) pour laquelle elle dégage le verrouillage, soit une position active (figure 4) pour laquelle elle entrave la baïonnette et en laquelle elle vient se loger entre l'un des ergots et l'une des rampes empêchant ainsi la rotation du système à baïonnette.

De préférence, la manette 21 est agencée transversalement à la direction verticale de la clavette 27 et comporte une came 31 présentant une rampe 32 qui vient en contact avec une cale 33 montée également mobile dans le boîtier 11 selon une direction parallèle à celle de la clavette et présentant une face 34 agencée sous ladite clavette 27 et une face inférieure 35 ayant un profil complémentaire à celui de la rampe 32.

Dans la réalisation représentée notamment aux figures 1 et 2 et selon une autre caractéristique intéressante de l'invention, l'orifice d'entrée 6 communiquant avec le bouilleur est équipé d'un clapet automatique 36 pouvant prendre trois positions à l'encontre d'un moyen élastique et en fonction de la présence ou non de la charge 5 et de la pression d'air comprimé, soit une position ouverte (figure 1) pour le remplissage en eau en l'absence de la charge 5 à infuser et de la pièce de fermeture 7, soit une position fermée(figure 2) d'isolement de la chambre à infusion en présence de la charge et de la pièce de fermeture et pour laquelle le clapet empêche la vapeur de pénétrer dans ladite chambre, soit une position entrouverte d'infusion pour laquelle le clapet autorise, sous la pression de l'eau chaude poussée par l'air comprimé et passant par un léger jeu périphérique entre l'orifice 6 et le clapet 36, l'eau chaude à traverser la charge à infuser.

Le moyen élastique du clapet 36 comprend, par exemple, un ressort 37 de compression qui est interposé entre le corps dudit clapet et la pièce de réception 4, et qui le rappelle toujours vers sa position ouverte.

Ce clapet permet d'isoler totalement la charge à infuser de la vapeur générée lors du chauffage et donc, d'après des essais réalisés, extraire tous les arômes de cette charge uniquement lors du déclenchement de l'infusion. Ceci est d'autant plus vrai lorsque l'appareil est destiné à réaliser un café dit « restretto » pour lequel la charge est identique à un expresso normal, mais la quantité d'eau est très réduite.

## Revendications

1. Appareil de confection d'infusions du type à retournement comportant un réservoir (1) présentant un fond (2) et une ouverture (3) communiquant avec une tête d'infusion (1A), la tête d'infusion comprenant une pièce(4) de réception d'une charge (5) à infuser et présentant un orifice d'entrée (6) communiquant avec l'ouverture du réservoir, et une pièce de fermeture(7) reliée à un orifice(S) d'écoulement de l'infusion et délimitant entre elles une chambre d'infusion, ledit réservoir étant connecté, via une paille (8) débouchant dans la région de fond du réservoir, à un distributeur(9) doté d'au-moins une voie reliée à un moyen(10) de mise en pression d'air, pour chasser l'eau chaude contenue dans le réservoir, et le réservoir (1) pouvant occuper deux positions, soit une position d'attente correspondant au remplissage par l'ouverture tournée vers le haut ou de chauffage avec l'ouverture susceptible d'être coiffée par la tête d'infusion, soit une position d'infusion pour laquelle le réservoir et la tête sont retournés vers le bas permettant l'écoulement de l'infusion dans un récipient,
le réservoir étant associé à un moyen de chauffage (R) constituant ainsi un bouilleur et comporte une soupape (12) agencée au-dessus d'un seuil de remplissage et dont l'élément mobile (14) peut occuper soit une position de repos pour laquelle la soupape peut mettre le réservoir à l'air libre via un conduit (16), soit une position d'obturation en laquelle l'élément mobile repose sur un siège (15) d'étanchéité et pour laquelle la soupape ferme la liaison au conduit et est amenée lorsque le réservoir est en position d'infusion.

2. Appareil selon la revendication 1, **caractérisé en ce que** le conduit (16) de la soupape(12) est associé à une chambre(17) qui comporte deux entrées, une entrée communiquant avec le siège (15) d'étanchéité et l'autre entrée reliée à la paille (8), ainsi qu'une sortie(18) reliée au conduit (16) relié lui-même au distributeur(9), le distributeur comportant une vanne à au-moins deux voies, manoeuvrée par une manette(21) et comprenant une arrivée d'air comprimé (A) et deux voies de sélection dont une voie (B) est reliée par une canalisation unique (22) à la sortie (18) de la chambre(17) et reliée par ladite chambre(17) à la paille (8) d'amenée de l'air comprimé pour effectuer l'opération d'infusion, et dont l'autre voie (C) permet à la fois la mise à l'air libre, et la purge du bouilleur via la paille(8), la chambre (17) et la canalisation(22).

3. Appareil selon la revendication 1 ou 2, **caractérisé en ce que** la soupape (12) présente la forme d'un tube(19) agencé verticalement dans le réservoir(1) et dont une extrémité porte le siège d'étanchéité (15) fixé sur la chambre (17) et dont l'autre extrémité porte un siège(20) de repos, et la soupape est du type à bille (14) se déplaçant par gravité entre lesdits sièges, la bille(14) venant reposer soit sur le siège (20) de repos lorsque l'appareil est en position d'attente, soit sur le siège (15) d'étanchéité lorsque l'appareil est en position d'infusion.

4. Appareil selon la revendication 3, **caractérisé en ce que** la bille est du type plongeant réalisée en acier ou en verre.

5. Appareil selon l'une quelconque des revendications 2 à 4, **caractérisé en ce qu'**il comporte un dispositif de sécurité subordonné, d'une part à la manette (21) du distributeur(9), et d'autre part, à une clavette(27) montée mobile entre deux états de verrouillage-déverrouillage du système de fixation de la pièce de fermeture (7) sur la pièce de réception (4) de la tête d'infusion et subordonnée à une position de purge prise par la manette, ladite clavette(27) et le distributeur(9) étant liés par un mécanisme à fonctionnement concomitant.

6. Appareil selon la revendication 5, **caractérisé en ce que** le système de fixation étant du type à baïonnette avec des ergots (28) et des rampes(29) respectivement agencés sur la pièce de fermeture(7) et sur la pièce de réception(4), la clavette(27) est montée mobile par gravité selon une direction verticale ou longitudinale dans un logement(30) pratiqué dans le boîtier(11) et peut occuper en fonction de la position prise par la manette du distributeur soit une position neutre pour laquelle elle dégage le verrouillage, soit une position active pour laquelle elle entrave la baïonnette et en laquelle elle vient se loger entre l'un des ergots et l'une des rampes empêchant ainsi la rotation du système à baïonnette.

7. Appareil selon la revendication 6, **caractérisé en ce que** la manette(21) est agencée transversalement à la direction verticale de la clavette(27) et comporte une came (31) présentant une rampe(32) qui vient en contact avec une cale(33) montée mobile dans le boîtier selon une direction parallèle à celle de la clavette(27) et agencée sous ladite clavette.

8. Appareil selon l'une quelconque des revendications précédentes **caractérisé en ce que** l'orifice d'entrée(6) communiquant avec le bouilleur est équipé d'un clapet automatique (36) pouvant prendre trois positions, soit une position ouverte pour permettre le remplissage en eau en l'absence de la charge (5) et de la pièce de fermeture (7), soit une position fermée d'isolement de la chambre à infusion en présence de la charge et de la pièce de fermeture et pour laquelle ledit clapet empêche la vapeur de pénétrer dans ladite chambre, soit une position entrouverte d'infusion pour laquelle ledit clapet autorise l'eau chaude à traverser la charge(5) à infuser.

9. Appareil selon l'une quelconque des revendications précédentes, **caractérisé en ce que** le boîtier(11) présente une forme générale tubulaire renfermant le bouilleur électrique qui présente la forme d'un pot tubulaire dont l'ouverture(3) est fermée de façon étanche par la pièce de réception(4) qui comporte la soupape(12).

## Patentansprüche

1. Brühgerät durch einen Wendevorgang mit einem Behälter (1), der einen Boden (2) und eine mit einem Brühkopf (1A) verbundene Öffnung (3) aufweist, wobei der Brühkopf ein Aufnahmeteil (4) für eine aufzugießende Füllung (5) umfasst und eine mit der Öffnung des Behälters verbundene Eingangsöffnung (6) aufweist, sowie ein mit einer Abflussöffnung (S) für den Aufguss verbundenes Verschlussteil (7), die zwischen ihnen eine Brühkammer abgrenzen, wobei der Behälter über eine im Bereich des Behälterbodens mündende Leitung (8) mit einem Verteiler (9) verbunden ist, der mit mindestens einem an ein Druckbeaufschlagungsmittel (10) angeschlossenen Kanal ausgestattet ist, um das im Behälter befindliche heiße Wasser abzulassen, und wobei der Behälter (1) zwei Positionen einnehmen kann, nämlich eine Warteposition, die dem Auffüllen durch die nach oben gerichtete Öffnung oder dem Heizen entspricht, wobei die Öffnung durch den Brühkopf abgedeckt sein kann, bzw. eine Brühposition, in der der Behälter und der Kopf nach unten gewendet sind und so das Abfließen des Aufgusses in ein Gefäß ermöglichen, wobei der Behälter einem Heizmittel (R) zugeordnet ist und so einen Kocher bildet und ein Ventil (12) umfasst, das über einer Auffüllgrenze angeordnet ist und dessen bewegliches Element (14) entweder eine Ruheposition einnehmen kann, in der das Ventil den Behälter über eine Leitung (16) entlüften kann, oder eine Verschlussposition, in der das bewegliche Element auf einem Abdichtungssitz (15) aufliegt und in der das Ventil die Verbindung zur Leitung unterbricht und in diese gebracht wird, wenn sich der Behälter in der Aufgussposition befindet.

2. Gerät nach Anspruch 1, **dadurch gekennzeichnet, dass** die Leitung (16) des Ventils (12) einer Kammer (17) mit zwei Eingängen zugeordnet ist, wobei ein Eingang mit dem Abdichtungssitz (15) und der andere Eingang mit der Leitung (8) verbunden ist, sowie mit einem Ausgang (18), der mit der Leitung (16) verbunden ist, die wiederum mit dem Verteiler (9) verbunden ist, wobei der Verteiler ein durch einen Hebel (21) betätigtes Ventil mit mindestens zwei Wegen umfasst, sowie einen Druckluftzulauf (A) und zwei Auswahlkanäle, wobei ein Kanal (B) über eine einzelne Leitung (22) mit dem Ausgang (18) der Kammer (17) verbunden ist und über diese Kammer (17) mit der Leitung (8) für die Druckluftzufuhr verbunden ist, um den Brühvorgang durchzuführen, und wobei der andere Kanal (C) sowohl das Entlüften und das Ablassen des Kochers über die Leitung (8), die Kammer (17) und die Leitung (22) ermöglicht.

3. Gerät nach Anspruch 1 oder 2, **dadurch gekennzeichnet, dass** das Ventil (12) die Form eines Rohrs (19) aufweist, das senkrecht im Behälter (1) angeordnet ist und dessen ein Ende den auf der Kammer (17) fixierten Abdichtungssitz (15) trägt, und dessen anderes Ende einen Ruhesitz (20) trägt, wobei das Ventil ein Kugelventil (14) ist, das sich durch die Schwerkraft zwischen den beiden Sitzen hin und her bewegt, wobei die Kugel (14) entweder auf dem Ruhesitz (20) zum Aufliegen kommt, wenn das Gerät in der Warteposition ist, oder auf dem Abdichtungssitz (15), wenn das Gerät in der Brühposition ist.

4. Gerät nach Anspruch 3, **dadurch gekennzeichnet, dass** die Kugel eine aus Stahl oder Glas hergestellte Tauchkugel ist.

5. Gerät nach einem der Ansprüche 2 bis 4, **dadurch gekennzeichnet, dass** es eine untergeordnete Sicherheitsvorrichtung umfasst, zum einen am Hebel (21) des Verteilers (9), und zum anderen an einem Keil (27), der zwischen zwei Positionen (verriegelt/entriegelt) des Befestigungssystems des Verschlussteils (7) am Aufnahmeteil (4) des Brühkopfes beweglich montiert und einer vom Hebel eingenommenen Entlüftungsposition untergeordnet ist, wobei dieser Keil (27) und der Verteiler (9) durch einen zusammenwirkenden Mechanismus verbunden sind.

6. Gerät nach Anspruch 5, **dadurch gekennzeichnet, dass** das Befestigungssystem ein Bajonettsystem mit Stiften (28) und Rampen (29) ist, die jeweils am Verschlussteil (7) und am Aufnahmeteil (4) angeordnet sind, wobei der Keil (27) über die Schwerkraft entsprechend einer senkrechten oder Längsrichtung in einer Aufnahme (30) im Gehäuse (11) mobil gelagert ist und je nach Position des Hebels des Verteilers entweder eine Neutralstellung, in der er die Verriegelung freigibt, oder eine aktive Stellung einnimmt, in der er das Bajonett blockiert und sich zwischen den Stiften und eine der Rampen zum Aufliegen kommt und so das Drehen des Bajonettsystems verhindert.

7. Gerät nach Anspruch 6, **dadurch gekennzeichnet, dass** der Hebel (21) quer zur senkrechten Richtung des Keils (27) angeordnet ist und eine Nocke (31) mit einer Rampe (32) umfasst, die mit einem im Gehäuse parallel zum Keil (27) beweglich montierten Keil (33) in Berührung kommt und unter diesem Keil angeordnet ist.

8. Gerät nach einem der vorausgehenden Ansprüche, **dadurch gekennzeichnet, dass** die mit dem Kocher verbundene Eingangsöffnung (6) mit einer automatischen Klappe (36) ausgestattet ist, die drei Positionen einnehmen kann, nämlich eine geöffnete Position, um das Auffüllen mit Wasser zu ermöglichen, wenn keine Füllung (5) und kein Verschlussteil (7) vorhanden sind, oder eine geschlossene Position zum Isolieren der Brühkammer, wenn eine Füllung und das Verschlussteil vorhanden sind und in der die Klappe verhindert, dass Dampf in die Kammer eindringt, oder eine halb geöffnete Brühposition, in der die Klappe das Durchfließen von heißem Wasser durch die aufzugießende Füllung (5) erlaubt.

9. Gerät nach einem der vorausgehenden Ansprüche, **dadurch gekennzeichnet, dass** das Gehäuse (11) im Allgemeinen röhrenförmig ist, den elektrischen Kocher einschließt, der die Form eines Rohrtopfes aufweist, dessen Öffnung (3) durch das das Ventil (12) umfassende Aufnahmeteil (4) dicht abgeschlossen ist.

## Claims

1. An appliance for making infusions, of the reversible type, comprising a reservoir (1) with a bottom (2) and an opening (3) communicating with an infusion head (1A), wherein the infusion head comprises a part (4) for receiving a load (5) to be infused and having an inlet orifice (6) communicating with the opening of the reservoir, and a closing part (7) connected to an infusion flow orifice (S) and demarcating between them an infusion chamber, wherein said reservoir is connected, via a straw (8) opening into the bottom area of the reservoir, to a directional valve (9) with at least one way connected to a means (10) to apply air pressure so as to push out the hot air contained in the reservoir, and wherein the reservoir (1) can occupy two positions, either a standby position corresponding to filling through the opening turned upward or heating with the opening liable to be capped by the infusion head, or an infusion position where the reservoir and the head are turned over downward allowing the infusion to flow into a container, wherein the reservoir is connected to a heating means (R) thus constituting a boiler and comprising a valve (12) arranged above a filling threshold, the moving element (14) of which can occupy either a rest position in which the valve can open the reservoir to the atmosphere via a duct (16) or a closing-off position in which the moving element rests against a sealing seat (15) in which the valve closes the connection to the duct and into which it is moved when the reservoir is in the infusing position.

2. An appliance according to claim 1, **characterized in that** the duct (16) of the valve (12) is connected to a chamber (17) comprising two inlets, wherein one inlet communicates with the sealing seat (15) and the other inlet is connected to the straw (8), and an outlet (18) connected to the duct (16), which is itself connected to the directional valve (9), which comprises a valve with at least two ways, controlled by a lever (21) and comprising a compressed air inlet (A) and two selection ways, one way (B) of which is connected by a single pipe (22) to the outlet (18) of the chamber (17) and connected by said chamber (17) to the compressed air supply straw (8) to carry out the infusion operation, and the other way (C) of which makes it possible to both open to the atmosphere and flush the boiler via the straw (8), the chamber (17) and the pipe (22).

3. An appliance according to claim 1 or 2, **characterized in that** the valve (12) has the shape of a tube (19) arranged vertically in the reservoir (1) and one end of which has the sealing seat (15) fixed to the chamber (17), and the other end of which has a rest seat (20) and the valve is of the ball (14) type, moving by gravity between said seats, wherein the ball (14) rests either against the rest seat (20) when the appliance is in the standby position or in the sealing seat (15) when the appliance is in the infusion position.

4. An appliance according to claim 3, **characterized in that** the ball is of the plunging type and is made of steel or glass.

5. An appliance according to any of claims 2 to 4, **characterized in that** it comprises a safety device that is subordinated, firstly to the lever (21) of the directional valve (9) and secondly to a key (27) mounted to move between two statuses of locking and unlocking of the system for fastening the closing part (7) on the receiving part (4) of the infusion head and subordinated to a flushing position occupied by the lever, wherein said key (27) and the directional valve (9) are connected by a concurrent-operation mechanism.

6. An appliance according to claim 5, **characterized in that** the fastening system is of the bayonet type with pins (28) and ramps (29) arranged on the closing part (7) and the receiving part (4) respectively, wherein the key (27) is mounted to move by gravity along a vertical or longitudinal direction in a slot (30) made in the housing (11) and can occupy, depending on the position of the lever of the directional valve, either a neutral position where the locking system is cleared or an active position where it blocks the bayonet and in which it moves between one of the pins and one of the ramps, thereby preventing the bayonet system from rotating.

7. An appliance according to claim 6, **characterized in that** the lever (21) is arranged transversally to the vertical direction of the key (27) and comprises a cam (31) with a ramp (32) that comes in contact with a spacer (33) mounted to move in the housing along a direction parallel to that of the key (27) and arranged under said key.

8. An appliance according to any of the preceding claims, **characterized in that** the inlet orifice (6) that communicates with the boiler is provided with an automatic check valve (36) that can occupy three positions, either an open position to allow the filling of water in the absence of the load (5) and the closing part (7) or a closed position to isolate the infusion chamber in the presence of the load and the closing part, in which said check valve prevents the steam from entering said chamber, or a half-open infusion position in which the check valve allows hot water to pass through the load (5) to infuse.

9. An appliance according to any of the preceding claims, **characterized in that** the housing (11) has a generally tubular shape enclosing the electrical boiler which has the shape of a tubular pot, the opening (3) of which is sealingly closed by the receiving part (4) that comprises the valve (12).
